# EUROPÄISCHE PATENTANMELDUNG

(11) **EP 2 311 722 A1**
(43) Veröffentlichungstag der Anmeldung: **20.04.2011**
(21) Anmeldenummer: 10186935.2
(22) Anmeldetag: 08.10.2010
(51) Int. Cl.: B63B 3/68, B64C 1/40, B64C 1/06, B63B 25/16, B61D 17/18

(54) **Isolationsanordnung**

(30) Priorität: 19.10.2009 DE 102009044286
(71) Anmelder: pinta production S.A., 2950 Courgenay (CH)
(72) Erfinder: Hysky, Johannes, 42799, Leichlingen (DE)
(74) Vertreter: Müller, Enno

(57) **Zusammenfassung**

Die Erfindung betrifft eine Anordnung (1) einer Isolierung in einem Mobilteil wie einem Schiff oder Flugzeug, wobei das Mobilteil aufstehend bezüglich einer Wand verlaufende Trägerteile aufweist und ein Trägerteil in Querschnitt mit einem Halterungsteil (5) überdeckt ist, wobei weiter zufolge von Klemmausformungen (6) an dem Halterungsteil (5) ein plattenartiges Isolierteil (7) zwischen zwei Trägern gehaltert ist. Um eine vorteilhafte Anordnung einer Isolierung in einem Mobilteil anzugeben, wird vorgeschlagen, dass das Isolierteil (7) aus einem gegebenenfalls ein- oder beidseitig mit einer Abdecklage überdeckten, schaumstoffartigen selbsttragenden Element (8) besteht.

## Beschreibung

Die Erfindung betrifft eine Anordnung einer Isolierung in einem Mobilteil wie einem Schiff oder Flugzeug, wobei das Mobilteil aufstehend bezüglich einer Wand verlaufende Trägerteile aufweist und ein Trägerteil im Querschnitt mit einem Halterungsteil überdeckt ist, wobei weiter zufolge von Klemmausformungen an dem Halterungsteil ein plattenartiges Isolierteil zwischen zwei Trägern gehalten ist.

Die genannten Trägerteile werden im Flugzeugbau auch als Stringer bezeichnet. Sie könne auch durch Stützwinkel ergänzt sein. Solche Trägerteile verlaufen entlang der Wand und sind fußseitig mit der Wand verbunden, beispielsweise vernietet oder verschweißt. Die freistehende Höhe der Träger ist beispielsweise in einem Abmessungsbereich von 0,1 bis 1 m gegeben. Alle Zwischenwerte, insbesondere in 1-mm-Schritten und hinsichtlich einer ein- oder mehrfachen Einengung der angegebenen Bereichsgrenzen in derselben Schrittweise, von oben und/oder von unten, sind hiermit in die Offenbarung eingeschlossen.

Bei einer derartigen bekannten Anordnung ist das Halterungsteil über das Trägerteil gestülpt, wobei das Halterungsteil eine im Wesentlichen U-förmige Gestalt aufweist. Entsprechend übergreift der U-Steg die freie Stirnkante des Trägers. Die Isolierteile bestehen aus in einer folienartigen Umhüllung aufgenommenen Isolierteilen. Im Flugzeugbau wird als Isolierstoff vorwiegend Glaswolle eingesetzt.

Ausgehend von dem beschriebenen Stand der Technik stellt sich der Erfindung die Aufgabe, eine vorteilhafte Anordnung einer Isolierung in einem Mobilteil anzugeben.

Eine mögliche Lösung dieser Aufgabe ist nach einem ersten Erfindungsgedanken durch den Gegenstand des Anspruches 1 gegeben, wobei darauf abgestellt ist, dass das Isolierteil aus einem, gegebenenfalls ein- oder beidseitig mit einer Abdecklage überdeckten, schaumstoffartigen selbsttragenden Element besteht. Wesentlich ist zunächst, dass das Isolierteil selbsttragend ist, auch ohne eine Abdeckung. Unter selbsttragend wird hierbei verstanden, dass bei freier Einspannung eines beispielsweise 2 cm dicken Isolierteils, das eine Breite von beispielsweise 10 cm aufweist, die Abbiegung nach unten am freien Ende bei einer freien Länge von dem 5- bis 10-fachen der Dicke geringer ist, als die Dicke dieses Werkstoffes, also insbesondere eines Schaumstoffes. Und dies basierend auf dem Werkstoff als solchem, also ohne etwa eingezogene Trägerelemente oder dergleichen. Hinsichtlich Mobilteil kann es sich um die unterschiedlichsten Vorrichtungen handeln. Neben einem Schiff oder Flugzeug könnte es sich auch beispielsweise um einen Zug, Bus, Lastkraftwagen oder schweres Baustellenfahrzeug handeln.

Bevorzugt ist das Isolierteil als Plattenteil ausgebildet. Weiter bevorzugt ein- oder beidseitig mit einer Abdecklage überdeckt. Darüber hinaus bevorzugt handelt es sich um ein Schaumstoffelement oder ein Element auf Basis eines gebundenen Blähglasgranulats. Beispielsweise wird auf die DE 19712 835 C3 oder die EP 971862 B1 zu dem genannten Blähglaswerkstoff verwiesen. Hinsichtlich Schaumstoff ist Melaminharzschaumstoff bevorzugt.

Die Abdecklage ist bevorzugt auf einer Breitseite angeordnet und zumindest eine Breitseite des Isolierteils ist auch bevorzugt feuchtigkeits-undurchlässig ausgebildet. Weiter bevorzugt handelt es sich bei der feuchtigkeitsundurchlässigen Breitseite um diejenige Seite, die, wenn nur eine Abdecklage vorgesehen ist, die genannte Abdecklage aufweist und die Feuchtigkeits-Undurchlässigkeit durch die Abdecklage gegeben ist. Die Abdecklage kann eine Folie oder auch eine Textillage sein. Sie kann wasserdicht oder (nur) wasserabweisend sein. Sie kann auch luftdicht oder luftdurchlässig sein. Auch kann es sich um eine"atmende" Membran handeln. Etwa entsprechend "Goretex". Dadurch, dass eine eine Stirnseite des Isolierteils freilassende Abdecklage auf dem das Isolierteil wesentlich bildenden schaumstoffartigen Element vorgesehen ist, kann das Isolierteil über seine Stirnseiten günstig einen Feuchtigkeitsaustausch mit der Umgebung durchführen. Im Hinblick auf eine Anwendung im Flugzeug kann hierüber auch ein Druckausgleich erfolgen. Gleichwohl ist eine wirksame Sperrung von Feuchtigkeitstransport quer durch das Isolierteil erreicht.

Hierbei ist es auch bevorzugt, dass die Halterung breitseitig feuchtigkeitsdicht oder annähernd feuchtigkeitsdicht mit der zugehörigen Breitseite des Isolierteils abschließt. Eine Feuchtigkeitsableitung kann dann im Inneren des so gebildeten Verbundes aus Halterungsteil und Isolierteil erfolgen.

Weitere Merkmale der Erfindung sind nachstehend, auch in der Figurenbeschreibung, oftmals in ihrer bevorzugten Zuordnung zu dem bereits vorstehend behandelten Anspruchskonzept erläutert, sie können aber auch in einer Zuordnung zu nur einem oder mehreren einzelnen Merkmalen, die hier beschrieben sind, insbesondere Merkmalen des bereits abgehandelten Anspruchs 1, oder unabhängig oder in einem anderem Gesamtkonzept von Bedeutung sein.

So ist bevorzugt, dass das Halterungsteil ein Schaumstoffteil ist. Weiter bevorzugt handelt es sich um einen weichelastischen Schaumstoff, beispielsweise einen Polyethylen-Schaumstoff. Es handelt sich diesbezüglich darüber hinaus bevorzugt um einen geschlossen-zelligen Schaumstoff. Es kann auch ein Schaumstoff verwendet sein, der zumindest in seinem Zusammenwirkungsbereich mit dem Isolierteil im Hinblick auf einen Feuchtigkeitstransport bremsend oder sperrend ausgebildet ist, beispielsweise durch eine Verhautung oder eine gesondert aufgebrachte Folie. Hinsichtlich dieses Schaumstoffs sind Raumgewichte im Bereich von 20 - 40 kg/m3 bevorzugt. Alle Zwischenwerte, insbesondere in 0,5 kg/m³-Schritten und hinsichtlich einer ein- oder mehrfachen Einengung der angegebenen Bereichsgrenzen in derselben Schrittweise, von oben und/oder von unten, sind hiermit ebenfalls in die Offenbarung eingeschlossen.

Die Klemmausformungen des Halterungsteils kommen zumindest teilweise auf einer oder beiden Flachseiten des Isolierteils zur Anlage. Soweit nur auf einer Seite eine Klemmausformung zur Anlage kommt, ist dies bevorzugt auf der der Außenwand zugewandten Seite des Mobilteils. Das Halterungsteil umgreift im Querschnitt entsprechend bevorzugt U-förmig das Isolierteil. Hierdurch ergibt sich insbesondere bei einer Ausbildung des Halterungsteils aus einem praktisch feuchtigkeits-undurchlässigen Werkstoff, wie eben einem geschlossen-zelligen Schaumstoff, eine Ergänzung der durch die Abdecklage auf einer Flachseite des Isolierteils gegebene Feuchtigkeitssperre. Zudem ergibt sich eine vorteilhafte Bedämpfung des Trägerteils. Somit kann sich diese Isolieranordnung auch akustisch vorteilhaft auswirken.

Das Halterungsteil und/oder Isolationsteil kann, wie schon angemerkt, aus einem Hartkunststoff wie etwa Doppelsteg-Platten oder auch Plattenmaterial aus recyceltem Glas, wie oben angemerkt beispielsweise einem Blähglas-Compound bestehen.

Das Halterungsteil bzw. Isolationsteil kann auch aus dem vorbeschriebenen Material bestehen, wobei das Bindungsmaterial so gewählt ist, dass sich ein flexibles Teil ergibt. Die Flexibilität kann sich darin ausdrücken, dass ein aus diesem Material mit 1 cm Dicke beispielsweise und bei rechteckiger Ausbildung einer Länge von 18 cm und einer weiteren von 10 cm so weit flexibel abbiegbar ist, dass es bei Einspannung an der einen Schmalseite um die genannte Dicke oder mehr elastisch abbiegbar ist und sich nach Freigabe auch entsprechend wieder zurückstellt.

Die genannte Abdecklage erbringt in Kombination mit dem aus Schaumstoff wesentlich bestehenden Isolierteil auch einen günstigen Sandwich-Aufbau, welcher die Stabilität des Isolierteils fördert. Dies ermöglicht es auch, einen Schaumstoff zu verwenden, der für sich genommen eine erforderliche Stabilität, die etwa darin zu sehen ist, dass eine freitragende Grundfläche von einem oder mehreren Quadratmetern erreicht werden soll, nicht erbringt. Dies bei einer Dicke des Isolierteils (einschließlich Abdecklage) zwischen beispielsweise 5 und 100 mm. Besonders bevorzugt ist ein offenporiger Schaumstoff. Darüber hinaus bevorzugt ein Melaminharz-Schaumstoff.

Hinsichtlich des Halterungsteils ist weiter bevorzugt, dass ein erstes Halterungsteil in einem Eckbereich, in dem etwa ein Trägerwinkel auf einen Stringer oder einen zweiten quer zu dem ersten Stringer verlaufenden Stringer stößt, mit einem winkelig zu seiner Erstreckungsrichtung verlaufenden zweiten Halterungsteil zusammentrifft. Dieses zweite Halterungsteil kann in dem Beispielsfall dann etwa übergreifend zu dem Halterungswinkel bzw. dem zweiten Stringer vorgesehen sein. Weiter ist diesbezüglich bevorzugt, dass beide Halterungsteile hinsichtlich einer Abdichtung in dem Eckbereich aneinander formangepasst ist. Diese Gestaltung ermöglicht es zunächst, das genannte Isolierteil auf seinem gesamten Umfang jeweils in einem Halterungsteil klemmzuhaltern. Zudem ist auf Grund der beschriebenen Ergänzung der feuchtigkeits-undurchlässigen Ausbildung des Isolierteils durch das Halterungsteil auch in solchen Eckebereichen praktisch keine Unterbrechung gegeben. Hierbei ist allerdings nicht immer gefordert, dass ein vollständig feuchtigkeitsdichter Abschluss erreicht ist. Angestrebt wird ein im Wesentlichen feuchtigkeitsdichter Abschluss und/oder eine akustische Isolation (Abdichtung).

Ein Träger, wie er hier angesprochen ist, also speziell ein Stringer, kann einen Durchbruch aufweisen. Diesbezüglich ist es bevorzugt, dass auch der Durchbruch mittels eines Schaumstoffteils abgedichtet ist. Besonders bevorzugt ist, dass die Abdichtung in Zusammenwirkung mit einem den Durchbruch durchsetzenden Element wie beispielsweise einem Kabel oder einem Kabelstrang erzielt ist. Darüber hinaus ist besonders bevorzugt, dass das Schaumstoffteil Teil des Halterungsteils ist. Es kann so bei der Herrichtung der für die Anordnung der Isolierung erforderlichen Teile sogleich an dem Halterungsteil mit ausgebildet sein und muss dann bei der Montage nur noch bedarfsgerecht in die diesbezügliche Öffnung eingefügt werden.

Bekannte Halterungsteile werden aus einem die Querschnittshöhe mindestens aufweisenden Rohmaterialteil ausgeschnitten. Insofern ist es hier bevorzugt, dass das im Querschnitt abgewinkelt oder insbesondere U-förmig verlaufende Halterungsteil zufolge von gehrungsschnittartigen Ausformungen aus einem Flachteil gebildet ist, das nur einem Winkelabschnitt, also etwa einem U-Schenkel oder U-Steg des Teiles in seiner Dicke entspricht. So kann ein solches Halterungsteil, insbesondere aus einem Schaumstoff, günstig durch Falten zusammengesetzt werden. Es kann auch eine Materialeinsparung erzielt werden. Im montierten Zustand ergibt sich ohnehin eine Selbsthalterung des Halterungsteils in Zusammenwirkung mit den klemmgehalterten Isolierteilen. Diese drücken zufolge der Halterung das Halterungsteil gegen die aufstehende Flachseite eines Trägers. Zudem kann ein Träger im Querschnitt an seinem freien Ende ein Winkel- oder T-Profil aufweisen. Hiermit ist das Halterungsteil bevorzugt zusätzlich formschlüssig an dem Träger gehalten. Es kann aber auch durch eine, zunächst, für die Zeit der Montage, provisorirische Befestigung, etwa durch einen Durchbruch durch den Träger hindurch, gehaltert sein.

Zusätzlich oder alternativ zu einer folienartigen Abdecklage kann auch eine lochresonatorartige Abdeckung eines Isolierteils oder insgesamt eine diesbezügliche Ausbildung des Isolierteils vorgesehen sein. Solche Abdeckungen sind vielfach bekannt. Es kann sich beispielsweise um eine Lochplatte handeln, die flächig im Abstand zu der Flachseite des Isolierteils angeordnet ist oder auch mit der Flachseite des Isolierteils, also des Schaumstoffteils, unmittelbar verbunden ist. Eine solche Lochplatte kann aus einem Hartwerkstoff bestehen, sie kann aber auch aus einer weiteren Schaumstofflage, etwa einer Lage geschlossenporigen Schaumstoffes, die entsprechende Löcher aufweist, bestehen.

Zunächst ist es bevorzugt, dass ein Isolierteil freitragend in den randseitig vorgesehenen Halterungselementen aufgenommen ist. Bei besonders großen Isolierteilen oder im Falle, dass eine besondere Befestigung zusätzlich gewünscht oder erforderlich ist, es kann aber auch vorgesehen sein, dass das Isolierteil von mit Abstand zu den Trägern angeordneten Halterungsstäben zur Verankerung zusätzlich abgestützt oder durchsetzt ist. Beim Durchsetzen des Isolierteils können diese Halterungsstäbe beispielsweise kopfseitig angestaucht sein, um ein Herausfallen der Isolationselemente zu hindern. Auf Grund der bevorzugt elastischen Ausbildung des Isolierteils ist aber gleichwohl eine entsprechende Demontage ohne wesentliche Beschädigung der Isolationselemente nicht ausgeschlossen.

Hinsichtlich des Isolationsteils sind Raumgewichte bezüglich Schaumstoff im Bereich von 4 - 14kg/m³insbesondere etwa 6 kg/m³ bei Melaminharzschaumstoff, bevorzugt. Bezüglich einem möglichen Isolationsteil auf Blähglasbasis, bevorzugt etwas höhere Raumgewichte, bis hin zum Bereich von 80 kg/m³, beginnend etwa bei 10 kg/m³ , bevorzugt zum Einsatz. Auch diesbezüglich sind sämtliche Zwischenwerte in der angegebenen Größe, also in Schrittweite von 0,5 kg/m³, auch hinsichtlich der genannten möglichen Einengung der Bereichsgrenzen von oben und/oder unten, in die Offenbarung hier mit einbezogen.

Nachstehend ist die Erfindung des Weiteren anhand der beigefügten Zeichnung, die allerdings lediglich Ausführungsbeispiele darstellt, erläutert. Hierbei zeigt:
- Fig. 1: eine schematische Querschnittsansicht einer Isolierungsanord- nung an der Wand eines Flugzeuges;
- Fig. 2: eine perspektivische Darstellung einer Eckausformung eines Halterungsteils;
- Fig. 3: einen Querschnitt durch ein Halterungsteil vor einem Zusam- menfügen;
- Fig. 4: eine Darstellung gemäß Fig. 3 eines weiteren Halterungsteils;
- Fig. 5: einen Querschnitt durch die Halterungsteile gemäß Fig. 3 und Fig. 4, im Einbauzustand;
- Fig. 6: eine Darstellung teilweise gemäß Fig. 1, mit alternativer Aus- bildung des Halterungsteils und zusätzlicher Träger- lochdämmung;
- Fig. 7: eine Darstellung gemäß Fig. 6 in nochmals alternativer Ausge- staltung;
- Fig. 8: eine weitere Darstellung gem. Fig. 6 bzw. Fig. 7 in alternativer Ausgestaltung;
- Fig. 9: eine weitere Darstellung gemäß den Fig. 6 bis 8, in weiterer al- ternativer Ausgestaltung;
- Fig. 10: eine weitere Darstellung einer alternativen Ausführungsform entsprechend den Fig. 6 bis 9;
- Fig. 11: schematische Querschnittsansicht eines gehalterten schallakti- ven Isolierteils;
- Fig. 12: eine Darstellung gemäß Fig. 11, mit einer Ausbildung des Iso- lierteils in Form eines Lochresonators;
- Fig. 13: eine Darstellung gemäß einer der Fig. 6 bis 10, mit zusätzlicher Bodenabstützung;
- Fig. 14: eine Darstellung gemäß Fig. 13, in weiterer alternativer Gestal- tung; und
- Fig. 15: eine schematische Darstellung gemäß Fig. 1 mit zusätzlicher Haltestiftverankerung.

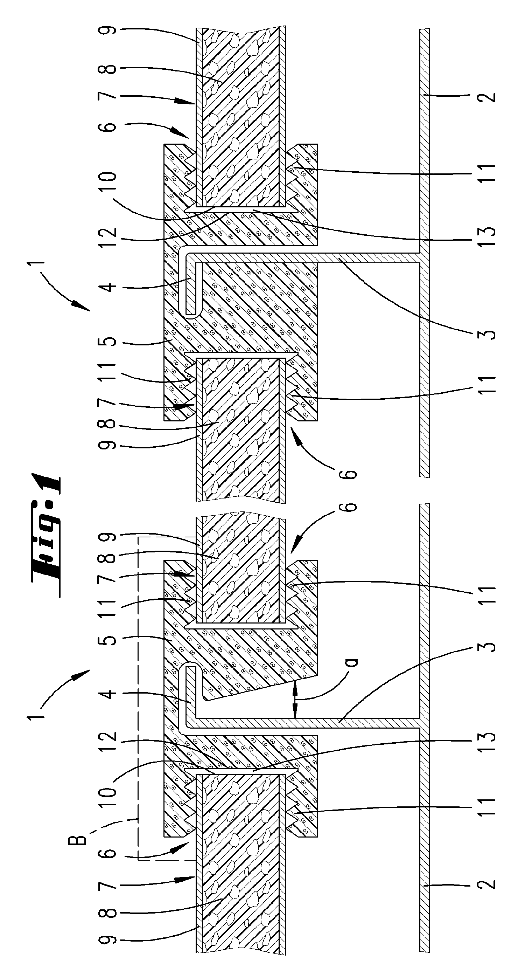

Dargestellt und beschrieben ist, zunächst mit Bezug zu Fig. 1, eine Anordnung 1 einer Isolierung, hier in einem Flugzeug. Dargestellt ist im Querschnitt eine Flugzeugaußenwand 2, auf welcher innenseitig aufstehende Stringer 3 angeordnet sind, die, bezogen auf den Querschnitt, an ihrem freien Ende, eine Abwinkelung 4 aufweisen. Ein solches Trägerteil bzw. Stringer 3 ist von einem Halterungsteil 5 überdeckt. Das Halterungsteil 5 ist von oben, vom freien Ende her, dem Stringer gleichsam übergestülpt. Seitlich, d.h. in Richtung der Außenwand 2 formt das Halterungsteil Klemmausformungen 6 aus, mittels derer ein Isolierteil 7 zwischen zwei derartigen von Halterungsteilen 5 überdeckten Trägern 3 gehaltert ist.

Das Isolierteil besteht aus einer Schaumstofflage 8, die, beim Ausführungsbeispiel, beidseitig mit einer Abdecklage 9 flächig überdeckt ist. Die Abdecklage kann mittels Klebstoff an dem Schaumstoffteil 8 gehaltert sein. Sie kann auch, beispielsweise aufkaschiert sein, d.h. durch Erwärmung des Schaumstoffteils 8 und/oder der Abdecklage 9 auf der zu verbindenden Flachseite bis über einen Schmelzpunkt diesbezüglicher Materialien und Andrücken an das weitere Teil. Die Abdecklage 9 kann insbesondere aus einer wasserundurchlässigen Kunststofffolie bestehen.

Mittels der Abdecklage 9 ist das Schaumstoffelement 8 beim Ausführungsbeispiel beidseitig feuchtigkeits-undurchlässig ausgebildet.

Das Schaumstoffteil 8 weist aber ersichtlich unbedeckte Stirnseiten 10 auf, die hier zu dem Halterungsteil 5 jeweils hinweisen. Über diese unbedeckten Stirnseiten kann das Isolierteil 7 "atmen".

Ein Halterungsteil 5 besteht beim Ausführungsbeispiel aus einem PE-Schaumstoff.

Ersichtlich ist zur Klemmhalterung eines Isolierteils 7 eine beim Ausführungsbeispiel der Fig. 1 U-förmige Klemmausformung gebildet, die zudem bevorzugt mit im Querschnitt zickzackförmigen Ausformungen 11 jeweils zu dem Isolierteil 7 hin gebildet ist. Das Halterungsteil 5 ist jedenfalls bezogen auf einen der jeweils zwei Stringer 3, zwischen denen das Isolierteil gehaltert ist, mit einem Abstand a zur Außenwandung des Stringers 3 angeordnet. Dies ergibt die Möglichkeit hinsichtlich der Montage, die Flexibilität des Halterungsteils 5 auszunutzen und das Isolierteil einzusetzen, wonach das Halterungsteil wieder zurückfedert und das Isolierteil in der dargestellten Weise haltert.

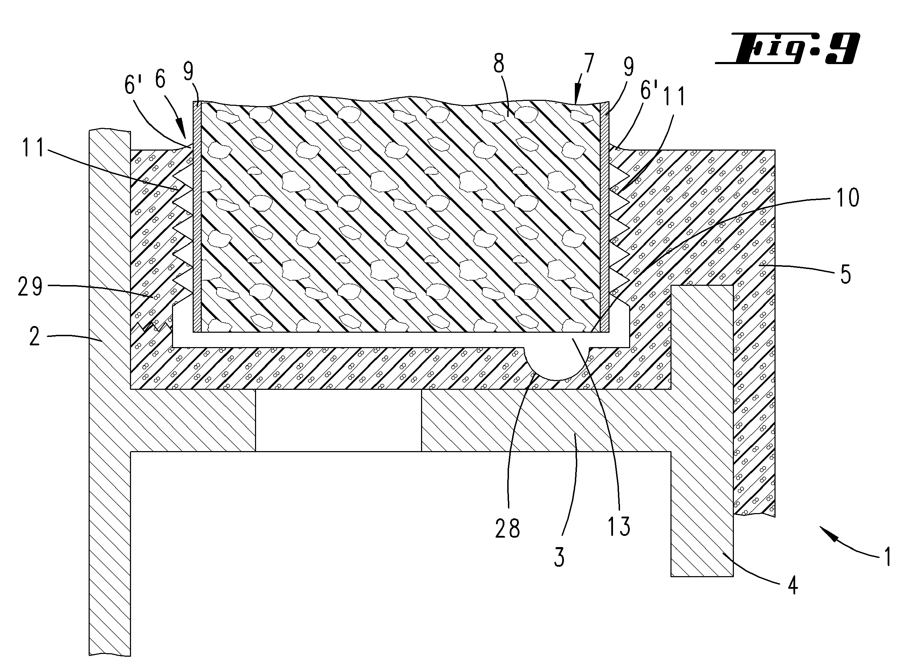

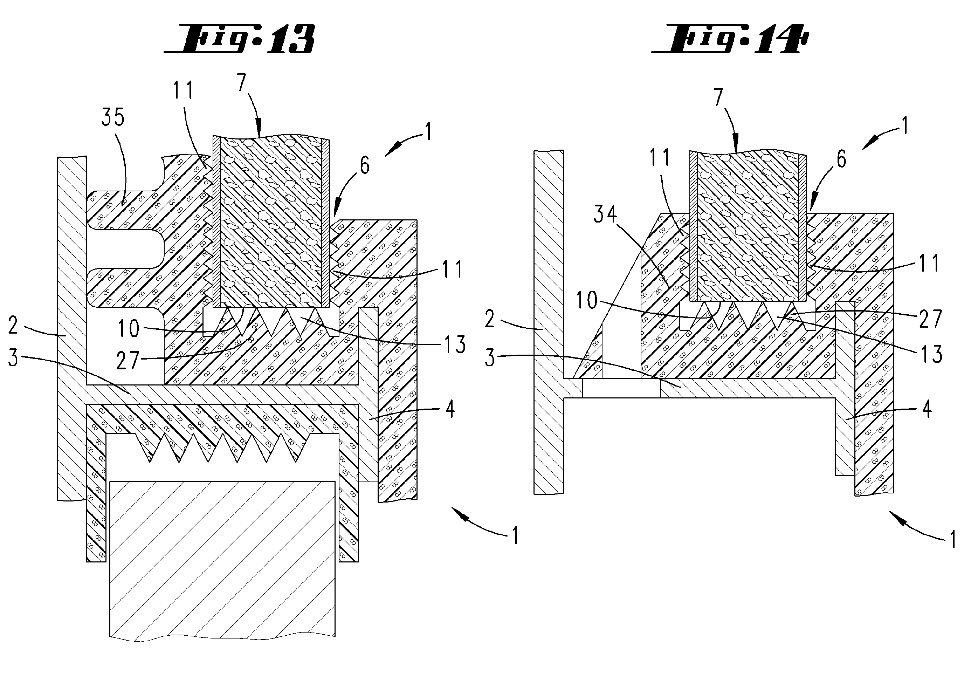

Ein strichlinierter Bereich B des Halterungsteils, also hier auf der der Außenwand 2 abgewandten Seite des Isolierteils 8, kann gegebenenfalls auch entfallen. Die Gegenhalterung kann hier durch eine Wandverkleidung oder dergleichen des Innenraumes gegeben sein. Natürlich kann ein Mittelbereich hiervon noch erhalten bleiben, um den U-Umgriff um den Stringer 3 zu realisieren. Bezüglich weiterer Ausführungsformen, siehe etwa auch Fig. 9 oder Fig. 13, kann aber dann auch dieser Umgriff gegebenenfalls entfallen.

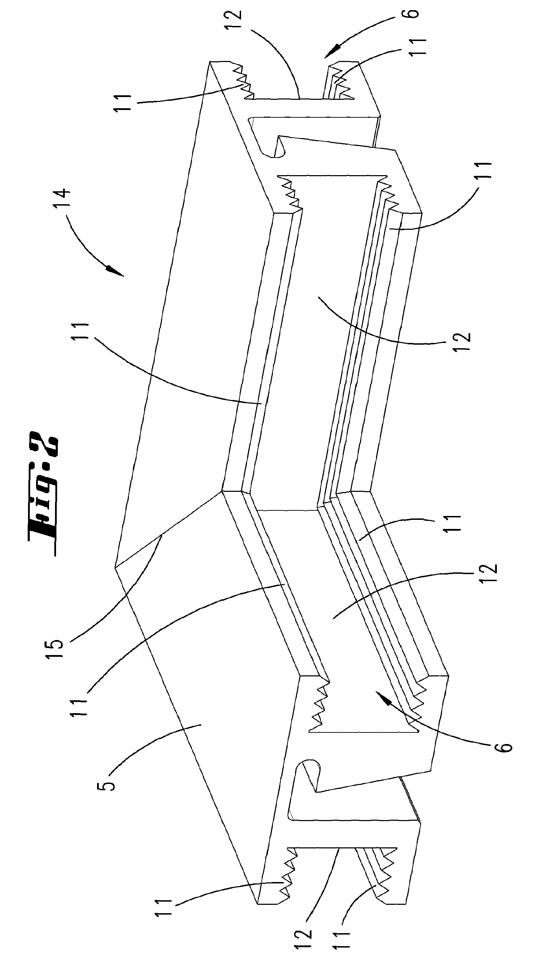

Zwischen einer Stirnseite 10 und einem zugehörigen Wandungsbereich 12 des Halterungsteils 5 verbleibt bevorzugt, wie dargestellt, ein Luftraum 13. Mit Bezug zu Fig. 2 ist ein Halterungsteil 5 teilweise, alleine und perspektivisch, dargestellt, hier bezüglich einer Eckausformung 14. Es ist zu erkennen, dass auf Grund gehrungsschnittartiger Gestaltung, siehe Verlauf der Randkante 15, eine annähernde Dichtigkeit auch im Eckbereich sichergestellt ist. Die Halterungsausformungen 6 ergänzen sich im Eckbereich, um auch so zulässig eine Ecke des Isolierteils dort zu haltern und im Wesentlichen abzudichten.

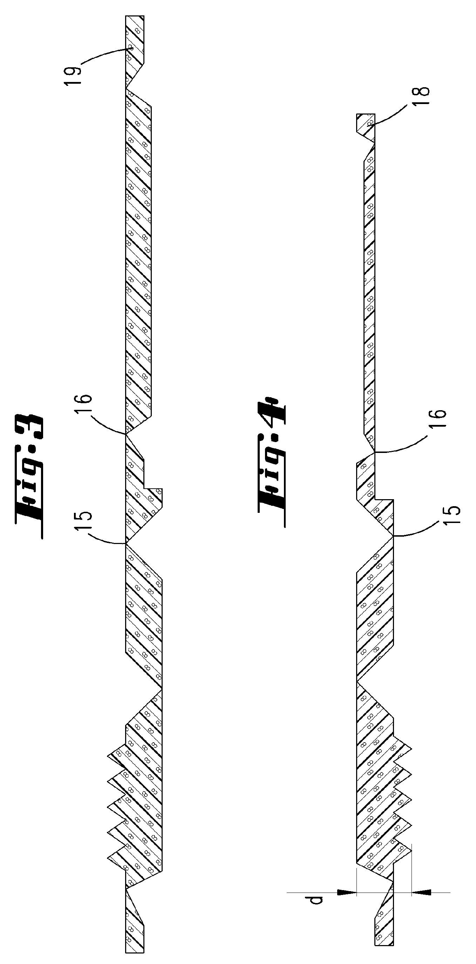

Die Fig. 3 und 4 zeigen jeweils einen Querschnitt durch ein aufgeklapptes Halterungsteil. Dies ist eine bevorzugte Ausgestaltung, bei welcher das Halterungsteil aus einem diesbezüglichen Flachteil, hier aus Schaumstoff, gebildet ist. Ersichtlich kann von einem Flachteil ausgegangen werden, das eine maximale Dicke d aufweist. Durch Trennschnitte und Gehrungsschnitte, die jedoch jeweils bevorzugt eine Verbindung wie etwa bei 15, 16, belassen, kann so ein jeweils zusammenhängendes Halterungsteil aus einem Flachteil herausgearbeitet werden.

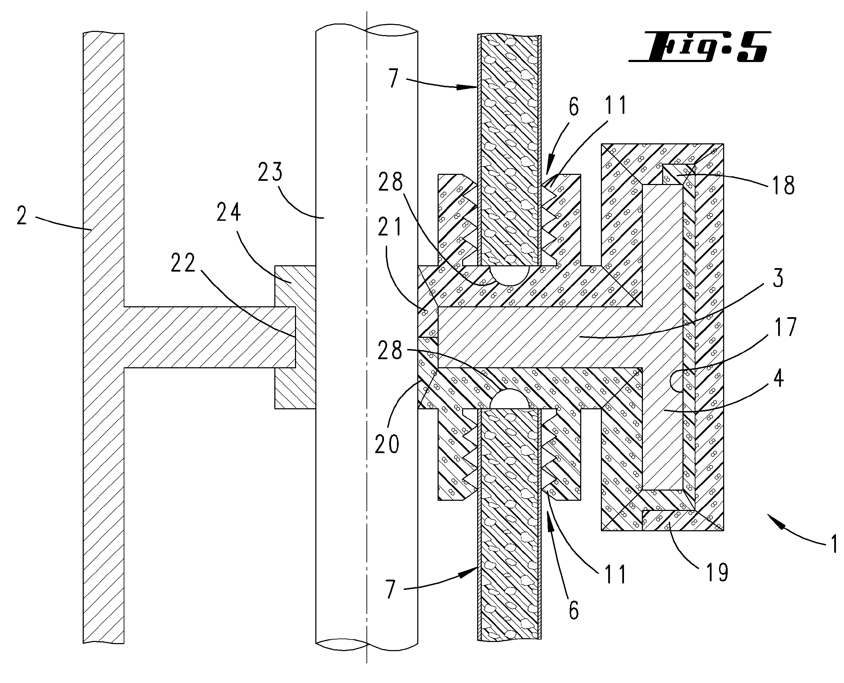

Der Einbau diesbezüglicher Flachteile in Ergänzung zu einem Gesamt-Halterungsteil ist in Fig. 5 im Querschnitt dargestellt. Dadurch, dass die Teile im Kopfbereich des Trägers sich überlappend angeordnet sind, nämlich stirnflächenseitig des hier T-förmig gestalteten Trägers, siehe Fläche 17, zweilagig angeordnet sind, zudem mit einem Übergriff randseitig, siehe Übergriffabsatz 18 bzw. 19, ist eine vorteilhafte Verschachtelung im Einbauzustand gegeben, so dass eine Halterung erreicht ist auch schon in einem Zustand, in dem ggf. die Festlegung des Halterungsteils an dem Träger durch ein eingesetztes Isolierteil 7 noch nicht erreicht ist. Ergänzend oder alternativ zu der beschriebenen doppellagigen Ausführung kopfseitig kann auch, ggf. nur, eine Zusatzabstützung durch Einschlagbereiche 20, 21, zugeordnet einem Durchbruch 22 des Trägers, durch den beispielsweise ein Kabelstrang 23 hindurchgeführt ist, erreicht sein. Hierbei kann unterseitig eine Abstützung durch ein Gegenisolierteil 24 erreicht sein.

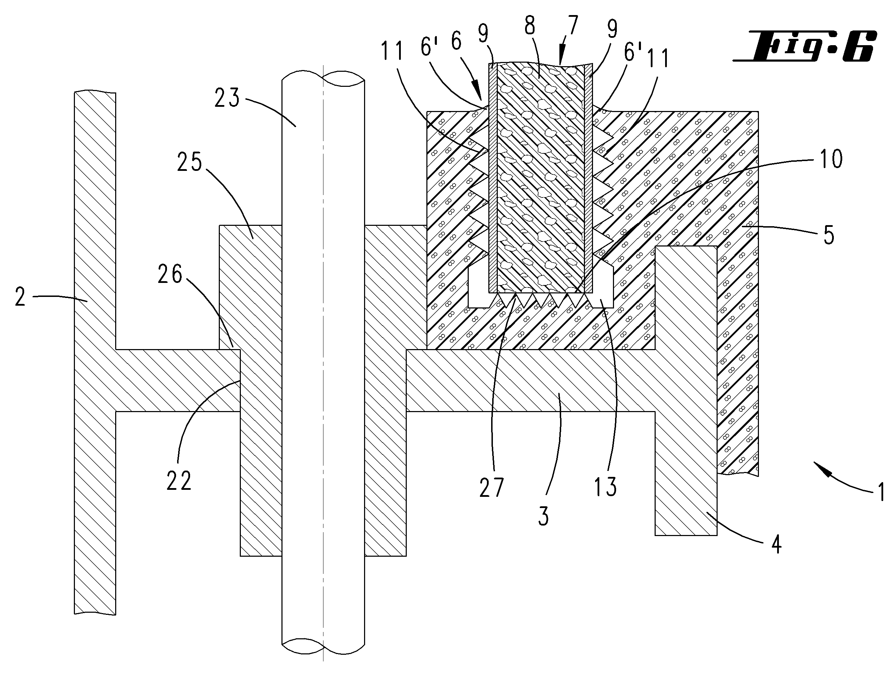

Bei der Ausführungsform der Fig. 6 ist zunächst von Bedeutung, dass der Durchbruch 22 mit einem eigenen, rohrförmigen Isolierteil 25 durchsetzt ist. Dieses Isolierteil weist einseitig einen Absatz 26 auf, so dass es von einer Seite in den Durchbruch 22 eingesteckt werden kann, aber nicht hindurchgesteckt. Dieses Isolierteil 25 ist auch bei diesem Ausführungsbeispiel von einem Kabelstrang 23 beispielsweise durchsetzt. Das Isolierteil 25 ist hier unabhängig von dem Halterungsteil 5 gebildet.

Zudem hat das Halterungsteil 5, zugeordnet einer Stirnfläche 10 des Isolierteils 7, im Querschnitt zickzackförmige Vorsprünge 27, die hier an der Stirnfläche 10 anliegen und gleichsam gesonderte Kanäle, etwa zur Feuchtigkeitsaufnahme, bilden. Die Isolierteile können mit einer solchen Abmessung vorgesehen sein, dass sich zwangsläufig bei einem montierten Isolierteil 7 diese Anlage ergibt. Ein gewisses diesbezügliches Übermaß des Isolierteils 7 lässt dies erreichen, da die Vorsprünge flexibel sind. Insbesondere sind die vorderen Vorsprünge, siehe Bezugszeichen 6', mit einer größeren Erstreckung jeweils auf den gegenüberliegenden Vorsprung hin, ausgebildet, so dass sich im zusammengesteckten Zustand der Isolation, wie in Fig. 6 auch dargestellt, eine deutliche Ausbiegung ergibt, so dass im Sinne einer Dichtlippe ein sicherer Abschluss mit der Oberfläche des Isolierteils 8 gegeben ist. Das Übermaß kann beispielsweise 2 bis 10 mm betragen, hier bezogen auf die Abmessung, bei der gerade eine Berührung vorliegt, wobei auch alle Zwischenwerte, insbesondere in 0,1 mm-Schritten, in diese Offenbarung mit einbezogen sind.

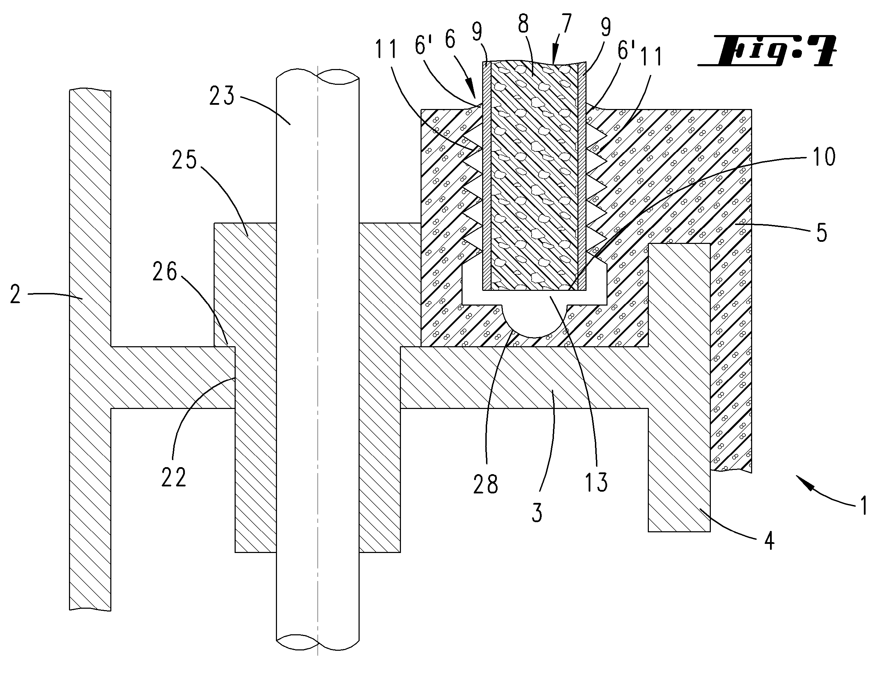

Beim Ausführungsbeispiel der Fig. 7 ist die der Stirnseite 10 zugewandte U-Stegseite der insgesamt U-förmigen Halterungsausformung in dem Halterungsteil 5 mit einer Kehlung 28 versehen, die einen vorteilhaft großen Raum zur Feuchtigkeitsaufnahme, die etwa aus der Stirnseite des Isolationselementes austritt, erbringt.

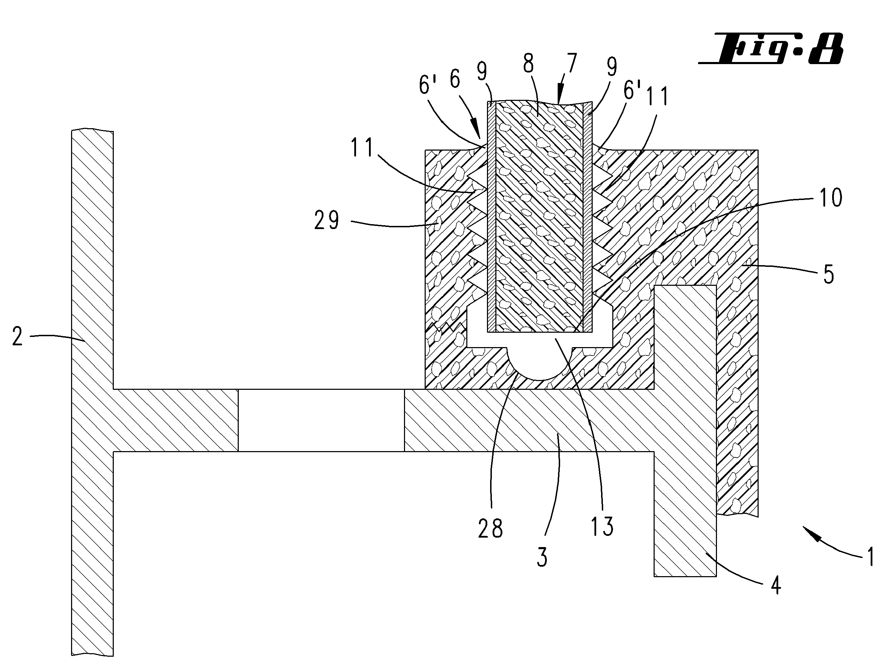

Beim Ausführungsbeispiel der Fig. 8 sind etwa gleiche Verhältnisse gegeben, wie beim Ausführungsbeispiel der Fig. 7. Hier ist nur verdeutlicht, dass sich die U-förmige Halterungsgestaltung des Halterungsteils 5, bzw. zugehörig zu dem Halterungsteil 5, auch, hier unterseitig, mit Hilfe eines Zusatzteils 29 bilden kann, das nicht notwendig einteilig mit dem Halterungsteil 5 ausgebildet ist.

Die Ausführungsform der Fig. 9 entspricht grundsätzlich der Ausführungsform der Fig. 8. Hier ist nur das Isolierteil 7 mit einer solchen dicken Abmessung vorgesehen, dass der untere Umgriff des Halterungsteils sogleich auf der Außenwand 2 aufliegt. Hierdurch ist eine Minimierung freien Luftraumes erreicht. Ersichtlich ermöglicht dies auch, wie durch die Zickzacklinie angedeutet, jedenfalls den Umgriff durch das Halterungsteil aus zwei getrennten Schaumstoffteilen oder sonstigen Materialien zu bilden. Es muss keine Einteiligkeit vorliegen, da die Abstützung durch die Einpassung zwischen das Isolierteil 7 und die Außenwand 2 gegeben ist.

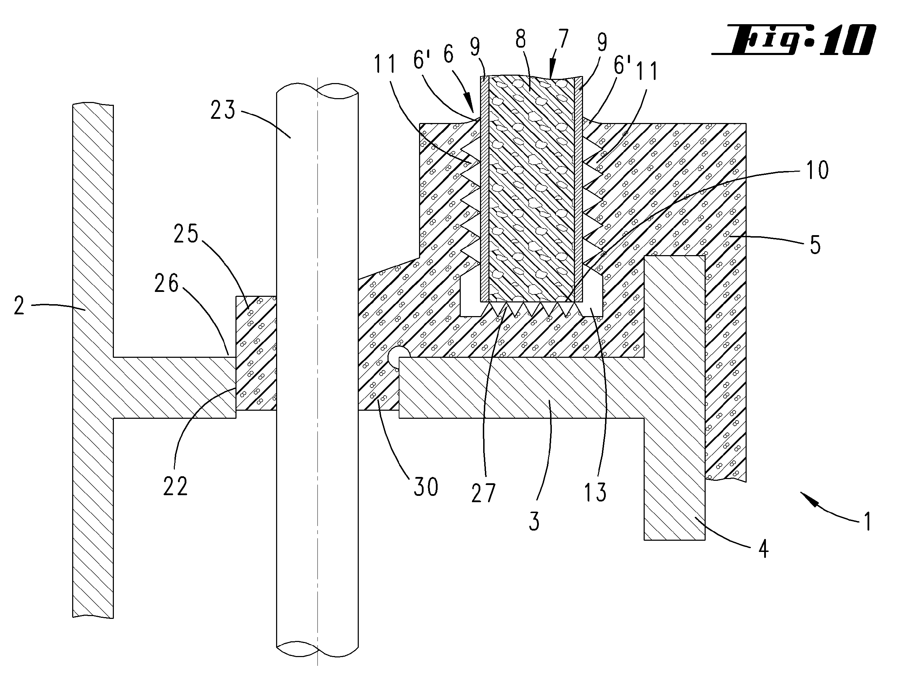

Beim Ausführungsbeispiel der Fig. 10 ist das Halterungsteil 5 einteilig mit einer Lochisolierung 30 ausgebildet, durch welche hier wiederum ein Kabelstrang hindurchgeführt ist. Die Lochisolierung kann allerdings, wie auch bei dem vorbeschriebenen Ausführungsbeispielen grundsätzlich möglich, den Durchbruch vollständig schließen, ohne dass andere Teile hindurchgeführt sind.

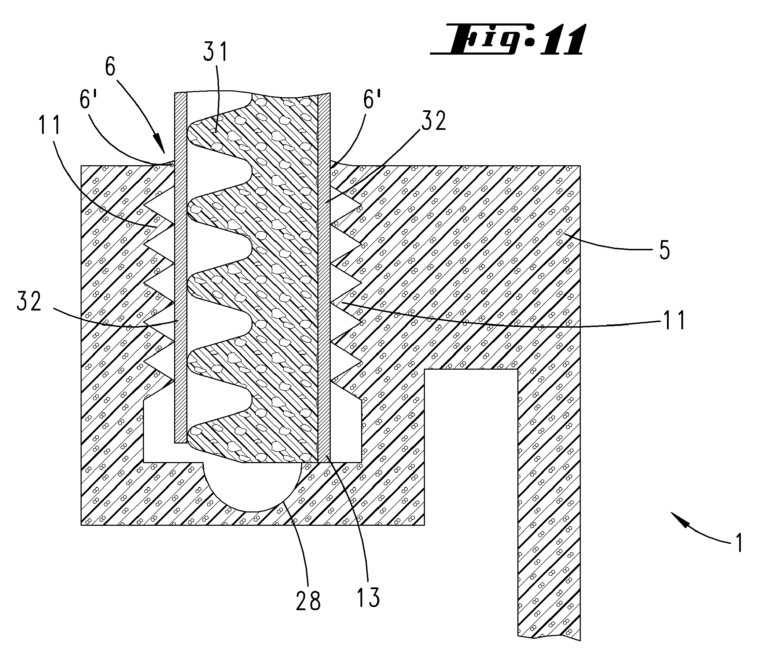

Beim Gegenstand der Fig. 11 ist lediglich ein Halterungsteil 5 schematisch mit einem Isolierteil 7 gezeigt, wobei das Isolierteil 7 als besonders gestaltetes schallaktives Teil ausgebildet ist. Unterseitig, d.h. bevorzugt der Außenwand des Mobilteils zugewandt, weist das Schaumstoffteil des Isolierteils 7 eine Noppenausformung 31 auf. Diese ist von einer Abdecklage 32 überdeckt. Bevorzugt ist die Abdecklage 32 hier schallaktiv, d.h. porös gestaltet. Sie kann allerdings auch als feuchtigkeitsdichte Folie gestaltet sein, da sich in Zusammenwirkung mit den Noppen 31 durch Schwingungen auch eine Schallbeeinflussung erreichen lässt. Bei dieser sowie auch den weiteren im Hinblick auf ein Schaumstoffteil beschriebenen Ausführungsformen kann eine gleiche Ausformung auch im Hinblick auf ein Blähglas basiertes Teil, wie als Werkstoff weiter angesprochen, gestaltet sein.

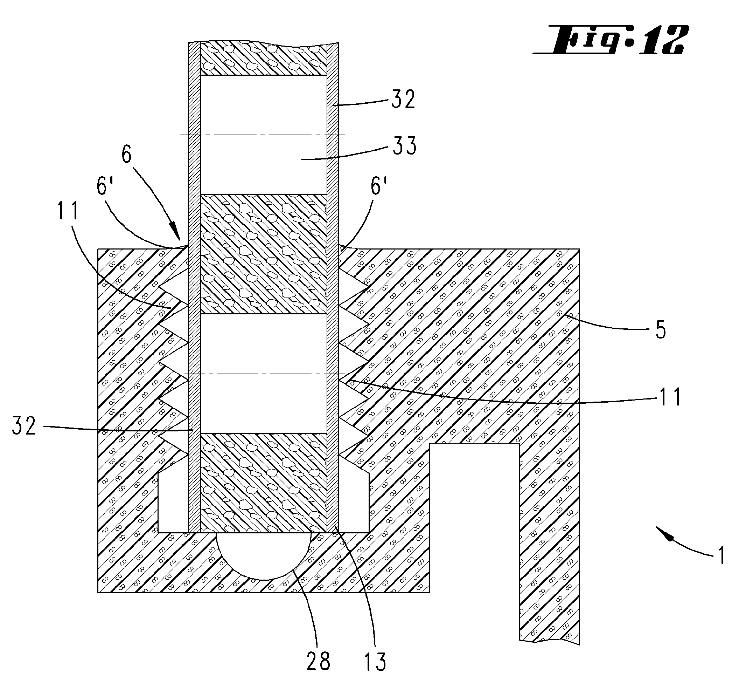

Bei der Ausführungsform der Fig. 12 ist eine vergleichbare Gestaltung gegenüber der Ausführungsform der Fig. 11. Nur ist hier das Schaumstoffelement des Isolierteils durchgehend als Lochresonator ausgebildet. Es sind Durchgangslöcher 33 vorgesehen, die allerdings außenseitig durch eine durchgehende Abdecklage überdeckt sind.

Die Ausführungsformen der Fig. 13 und 14 verdeutlichen, dass einerseits, Fig. 13, ohne in einen Durchbruch des Trägers einzugreifen, ein Integralhalterungsabschnitt 34 für eine Durchführung etwa eines Kabelschranks durch den Durchbruch vorgesehen sein kann. Die Ausführungsform der Fig. 14 verdeutlicht, dass das Halterungsteil sich mittels integraler Stützausformungen 35 auch auf der Wand des Mobilteils abstützen kann.

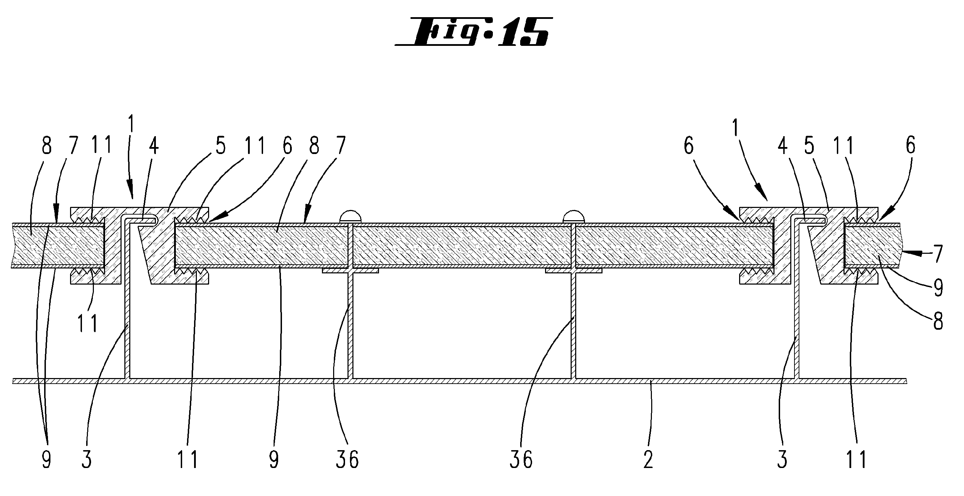

Die Ausführungsform der Fig. 15 schließlich zeigt eine Variante, bei welcher das Isolierteil mittels Halterungsstäben 36 mittig, im freitragenden Bereich zwischen zwei Halterungselementen 5, zusätzlich an der Wand festgelegt ist.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

### Bezugszeichenliste

- 1: Anordnung
- 2: Flugzeugaußenwand
- 3: Träger
- 4: Abwinkelung
- 5: Halterungsteil
- 6: Klemmausformung 6' Klemmausformung
- 7: Isolierteil
- 8: Schaumstoffteil, -lage
- 9: Abdecklage
- 10: Stirnseite, -fläche
- 11: Zickzackförmige Ausformung
- 12: Wandungsbereich
- 13: Luftraum
- 14: Eckausformung
- 15: Verbindung
- 16: Verbindung
- 17: Fläche
- 18: Übergriffabsatz
- 19: Übergriffabsatz
- 20: Einschlagbereich
- 21: Einschlagbereich
- 22: Durchbruch
- 23: Kabelstrang
- 24: Gegenisolierteil
- 25: Isolierteil (rohrförmig)
- 26: Absatz
- 27: Vorsprünge
- 28: Kehlung
- 29: Zusatzteil
- 30: Lochisolierung
- 31: Noppenausformung
- 32: Abdecklage
- 33: Löcher
- 34: Integralhalterungsabschnitt
- 35: Stützausformungem
- 36: Halterungsstäbe

- a: Abstand
- B: Bereich
- d: maximale Dicke

## Patentansprüche

1. Anordnung (1) einer Isolierung in einem Mobilteil wie einem Schiff oder Flugzeug, wobei das Mobilteil aufstehend bezüglich einer Wand verlaufende Trägerteile aufweist und ein Trägerteil in Querschnitt mit einem Halterungsteil (5) überdeckt ist, wobei weiter zufolge von Klemmausformungen (6) an dem Halterungsteil (5) ein plattenartiges Isolierteil (7) zwischen zwei Trägern gehaltert ist, **dadurch gekennzeichnet, dass** das Isolierteil (7) aus einem gegebenenfalls ein- oder beidseitig mit einer Abdecklage überdeckten, schaumstoffartigen selbsttragenden Element (8) besteht.

2. Anordnung nach Anspruch 1 oder insbesondere danach, **dadurch gekennzeichnet, dass** die Abdecklage auf einer Flachseite angeordnet ist und dass zumindest eine Flachseite des Isolierteils (7) feuchtigkeitsundurchlässig ausgebildet ist.

3. Anordnung nach einem oder mehreren der vorhergehenden Ansprüche oder insbesondere danach, **dadurch gekennzeichnet, dass** das Halterungsteil (5) ein Schaumstoffteil (8) ist.

4. Anordnung nach einem oder mehreren der vorhergehenden Ansprüche oder insbesondere danach, **dadurch gekennzeichnet, dass** das Halterungsteil (5) aus einem geschlossenzelligen Schaumstoff beispielsweise eine PE-Schaumbstoff, besteht.

5. Anordnung nach einem oder mehreren der vorhergehenden Ansprüche oder insbesondere danach, **dadurch gekennzeichnet, dass** das Halterungsteil (5) aus einem Blähglasgranulat besteht.

6. Anordnung nach einem oder mehreren der vorhergehenden Ansprüche oder insbesondere danach, **dadurch gekennzeichnet, dass** die feuchtigkeitsundurchlässige Ausbildung durch die Abdecklage (9) erreicht ist.

7. Anordnung nach einem oder mehreren der vorhergehenden Ansprüche oder insbesondere danach, **dadurch gekennzeichnet, dass** ein erstes Halterungsteil (5) in einem Eckbereich mit einem winkelig zu seiner Erstreckungsrichtung verlaufenden zweiten Halterungsteil (5) zusammentrifft und dass beide Halterungsteile hinsichtlich einer Abdichtung in dem Eckbereich an einander formangepasst sind.

8. Anordnung nach einem oder mehreren der vorhergehenden Ansprüche oder insbesondere danach, **dadurch gekennzeichnet, dass** das Isolierteil (7) aus einem gebundenen Blähglasgranulat besteht.

9. Anordnung nach einem oder mehreren der vorhergehenden Ansprüche oder insbesondere danach, **dadurch gekennzeichnet, dass** das gebundene Blähglasgranulat flexibel ist.

10. Anordnung nach einem oder mehreren der vorhergehenden Ansprüche oder insbesondere danach, **dadurch gekennzeichnet, dass** ein Träger (3) einen Durchbruch (22) aufweist und dass der Durchbruch (22) mittels eines Schaumstoffteils (8) abgedichtet ist.

11. Anordnung nach einem oder mehreren der vorhergehenden Ansprüche oder insbesondere danach, **dadurch gekennzeichnet, dass** die Abdichtung im Zusammenhang mit einem den Durchbruch (22) durchsetzenden Element wie beispielsweise einem Kabel oder einem Kabelstrang erzielt ist.

12. Anordnung nach einem oder mehreren der vorhergehenden Ansprüche oder insbesondere danach, **dadurch gekennzeichnet, dass** das Schaumstoffteil (8) Teil des Halterungsteils (5) ist.

13. Anordnung nach einem oder mehreren der vorhergehenden Ansprüche oder insbesondere danach, **dadurch gekennzeichnet, dass** ein Halterungsteil (5) im Querschnitt abgewinkelt verläuft, beispielsweise U-förmig, und dass dieses Halterungsteil (5) zufolge von gehrungsschnittartigen Ausformungen aus einem Flachteil gebildet ist, das nur einem Winkelabschnitt des Teiles in seiner Dicke entspricht.

14. Anordnung nach einem oder mehreren der vorhergehenden Ansprüche oder insbesondere danach, **dadurch gekennzeichnet, dass** das Isolierteil (7) innen- oder außenseitig eine lochresonatorartige Abdeckung aufweist.

15. Anordnung nach einem oder mehreren der vorhergehenden Ansprüche oder insbesondere danach, **dadurch gekennzeichnet, dass** das Isolierteil (7) mittels auf der Wand aufstehenden und mit Abstand zu dem Träger angeordneten Halterungsstäben (36) zusätzlich verankert ist.
